# EUROPEAN PATENT SPECIFICATION

(11) **EP 2 533 440 B1**
(45) Date of publication and mention of the grant of the patent: **19.12.2018**
(21) Application number: 11823003.6
(22) Date of filing: 20.04.2011
(51) Int. Cl.: H04J 3/16

(54) **METHOD AND DEVICE FOR SEQUENCING MEMBERS OF MULTIPLE VIRTUAL CONCATENATION GROUPS**
VERFAHREN UND VORRICHTUNG ZUR SORTIERUNG DER ELEMENTE MEHRERER VIRTUELLER VERKNÜPFUNGSGRUPPEN
PROCÉDÉ ET DISPOSITIF ADAPTÉS POUR SÉQUENCER DES MEMBRES D'UNE PLURALITÉ DE GROUPES DE CONCATÉNATION VIRTUELLE

(30) Priority: 07.09.2010 CN 201010276021
(43) Date of publication of application: 12.12.2012
(73) Proprietor: ZTE Corporation, Shenzhen City Guangdong Province 518057 (CN)
(72) Inventor: ZHANG, Sidong, Shenzhen City Guangdong Province 518057 (CN); CHENG, Jian, Shenzhen City Guangdong Province 518057 (CN)
(74) Representative: Murgitroyd & Company
(86) International application number: PCT/CN2011/073087
(87) International publication number: WO 2012/031480

(56) References cited:
- EP-A1- 1 936 849
- EP-A1- 2 216 922
- CN-A- 1 474 559
- CN-A- 1 561 074
- CN-A- 101 938 320
- US-B1- 7 493 392

## Description

### Technical Field

The present invention relates to the virtual concatenation technology in the field of optical communications, and more particularly, to sequencing of members in LCAS processing in the case of a plurality of VCGs.

### Background of the Related Art

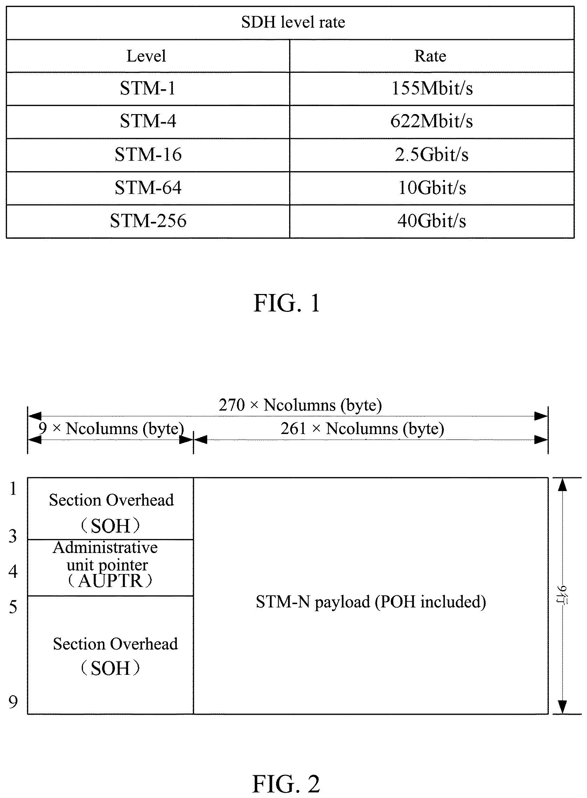

When a Synchronous Digital Hierarchy (SDH) system bears services, different levels of transfer rates corresponding to different levels of Synchronous Transfer Modules (STM) is shown in FIG. 1. Some transmitted information payloads, for example in image coding signals, IP router signals, etc., do not completely match with standard rates of various virtual containers of the SDH system, thus the concatenation technology is developed. The concatenation technology, which is divided into contiguous concatenation and virtual concatenation, can be used to dynamically adjust bandwidth of transmission services.

In the contiguous concatenation, adjacent C-n is cascaded into C-n-XC for transmission as a whole structure in the same STM-N (a frame structure of a SDH signal, the ITU-T specifies that frames of STM-N uses a rectangular block structure taking byte as a unit, which is a block frame structure of 9rows×270×Ncolumns, as shown in FIG.2). In the contiguous concatenation, contiguous bandwidth must be maintained in the entire transmission process. This technique requires that all network elements in the network which are passed through support processing of contiguous concatenation, so its application is limited.

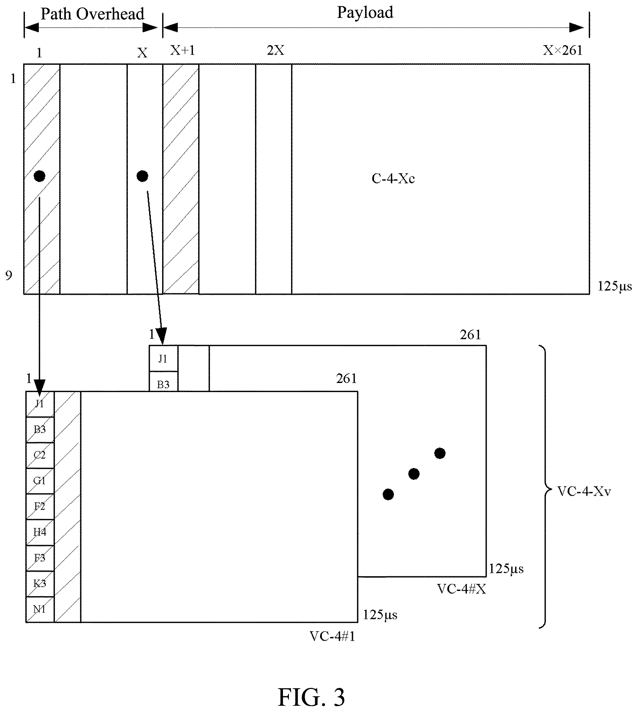

In the virtual concatenation, multiple adjacent or non-adjacent small virtual containers are multiplexed into a relatively large virtual container, and these relatively small virtual containers are independent of each other in the transmission process and are recombined into an adjacent bandwidth at an end point of the transmission, as shown in a schematic diagram of VC-4-Xv virtual concatenation groups of FIG. 3. Only network elements at the beginning and end of a channel are required to support a virtual concatenation function, and there is no such requirement for intermediate network elements, therefore, the virtual concatenation has a more loose application environment and is also easy to generalize.

During transmission for virtual concatenation, each of the mutually independent containers has a member serial number during the transmission to identify the order in which the containers loads data streams at a source end. The order has been disorganized after the transmission, and member serial numbers are required to be restored at a destination end to restore the data streams.

According to the Link Capacity Adjustment Scheme (LCAS) protocol, LCAS information including the member serial number of each VCG is transmitted in the current multiframe to indicate state information of the next multiframe. Therefore, in the case where members of a single virtual concatenation group (VCG) are sequenced, the members may be sequenced after the LCAS information is obtained. After the sequencing is completed, the sequence begins to be used when the next multiframe begins. Upon transmission for multiple virtual concatenation groups, since the time of obtaining the LCAS information for each VCG and the time at which the next multiframe begins are independent mutually and uncertain, a sequencing circuit is required to be configured for each of the VCGs such that the sequencing circuit sequences members of the VCG independently according to its respective LCAS information receiving progress. However, this will consume more hardware logic resources, especially in the case that the number of VCGs is relatively large.

The document EP 1936849 A1 discloses a method for mapping data information (Ethernet) from an input port (PT(#X)) to multiple members of a concatenated group (VCG(#1)). The method includes the steps of receiving configuration information indicating a rule for assigning the input port to the multiple members of the concatenated group, calculating (PU) a write address sequence taking into account the number of the multiple members of the concatenated group and calculating a read address sequence taking into account the configuration information and the write address sequence, storing the read address sequence into an address memory (AM), receiving the data information from the input port, storing at least part of the received data information into a data memory (DM) according to the write address sequence, reading, from the data memory, information of the multiple members of the concatenated group according to the read address sequence stored into the address memory.

### Summary of the Invention

A technical problem to be solved by the present invention is to provide a method and device for sequencing members of multiple VCGs so as to reduce hardware logic resource consumption in the case of multiple VCGs.

In order to solve the aforementioned problem, the present invention discloses a method for sequencing members of multiple virtual concatenation groups (VCG) comprising:
determining a sequencing queue of all arrived members of the VCGs according to the order of arrival time of the latest member in each of the VCGs, and sequencing members of each of the VCGs in the sequencing queue in turn; and
calling a member sequencing result of each of the VCGs when the time of calling the member sequencing result of each of the VCGs is reached, an interval between the time of calling the member sequencing result of each of the VCGs and the time of starting sequencing of the members of each of the VCGs being greater than or equal to a preset allowed time interval from sequencing to calling the sequencing result.

In the method, when the preset allowed time interval from sequencing to calling the sequencing result is reached, calling the member sequencing result of each of the VCGs comprises:
when the starting time of a multiframe head in a read direction is reached, reading a member sequencing result of a VCG corresponding to the multiframe, wherein an interval between the starting time of the multiframe head in the read direction and the end time of a sub-frame corresponding to the latest member of the VCG corresponding to the multiframe is equal to the allowed time interval from sequencing to calling the sequencing result.

A value of the allowed time interval from sequencing to calling the sequencing result is the larger one of the total time T1 required to sequence the members when the members of all the VCGs arrive simultaneously and the total time T2 required to sequence the members when the members of all the VCGs arrive separately.

The total time T1 required to sequence the members when the members of all the VCGs arrive simultaneously is a product of the time required to sequence members of a VCG and the number of supported VCGs.

The total time T2 required to sequence the members when the members of all the VCGs arrive separately is a time interval between the time at which a H4 or K4 byte in the last sub-frame in a multiframe of a channel corresponding to the latest member in a VCG and the time at which the next multiframe head of the channel arrives.

The arrival time of the latest member in the VCG is the arrival time of a H4 or K4 byte in the latest subframe obtained by comparing the arrival time of the H4 or K4 byte in the last sub-frame in a multiframe corresponding to each member of the VCG.

The present invention also discloses a device for sequencing members of multiple virtual concatenation groups (VCG) comprising a queue sequencing module, a sequencing circuit module and a calling module, wherein
the queue sequencing module is configured to determine a sequencing queue of all arrived members of the VCGs according to the order of arrival time of the latest member in each of the VCGs;
the sequencing circuit module is configured to sequence members of each of the VCGs in the sequencing queue in turn; and
the calling module is configured to call a member sequencing result of each of the VCGs when the time of calling the member sequencing result of each of the VCGs is reached, an interval between the time of calling the member sequencing result of each of the VCGs and the time of starting sequencing of the members of each of the VCGs being greater than or equal to a preset allowed time interval from sequencing to calling the sequencing result.

Preferably, in the device, the calling module, when the starting time of a multiframe head in a read direction is reached, reads a member sequencing result of a VCG corresponding to the multiframe, wherein an interval between the starting time of the multiframe head in the read direction and the end time of a sub-frame corresponding to the latest member of the VCG corresponding to the multiframe is equal to the allowed time interval from sequencing to calling the sequencing result.

A value of the allowed time interval from sequencing to calling the sequencing result is the larger one of the total time T1 required to sequence the members when the members of all the VCGs arrive simultaneously and the total time T2 required to sequence the members when the members of all the VCGs arrive separately.

The total time T1 required to sequence the members when the members of all the VCGs arrive simultaneously is a product of the time required to sequence members of a VCG and the number of supported VCGs.

The total time T2 required to sequence the members when the members of all the VCGs arrive separately is a time interval between the time at which a H4 or K4 byte in the last sub-frame in a multiframe of a channel corresponding to the latest member in a VCG and the time at which the next multiframe head of the channel arrives.

The arrival time of the latest member in the VCG is the arrival time of a H4 or K4 byte in the latest subframe obtained by comparing the arrival time of the H4 or K4 byte in the last sub-frame in a multiframe corresponding to each member of the VCG.

The technical scheme of the present invention can implement effectively sequencing members in multiple VCGs through a sequencing circuit, thereby significantly reducing the logical resource consumption.

### Brief Description of Drawings

FIG. 1 is SDH (Synchronous Digital Hierarchy) standard rates proposed by the ITU-T G.707;
FIG. 2 is a SDH STM-N frame structure proposed by the G.707;
FIG. 3 is a schematic diagram of VC-4-Xv acquired by virtual concatenation mapping;
FIG. 4 (a) is a schematic diagram of processing of each arrived VCG at a destination end in accordance with the first embodiment of the present invention;
FIG. 4 (b) is a schematic diagram where a sequencing circuit processes each VCG in accordance with the first embodiment of the present invention; and
FIG. 5 is a flow chart of a processing procedure in accordance with the first embodiment of the present invention.

### Preferred Embodiments of the Present Invention

The preferred embodiments of the present invention will be described in further detail in conjunction with the accompanying drawings and the specific implementation methods.

A device for sequencing members of multiple virtual concatenation groups (VCG) comprises a queue sequencing module, a sequencing circuit module and a calling module.

The queue sequencing module is configured to determine a sequencing queue of all arrived members of the VCGs according to the order of arrival time of the latest member in each of the VCGs.

The arrival time of the latest member in the VCG is the arrival time of a H4 or K4 byte in the latest subframe obtained by comparing the arrival time of the H4 or K4 byte in the last sub-frame in a multiframe corresponding to each member of the VCG.

The sequencing circuit module is configured to sequence members of each of the VCGs in the sequencing queue in turn.

The calling module is configured to call a member sequencing result of each of the VCGs when the time of calling the member sequencing result of each of the VCGs is reached, an interval between the time of calling the member sequencing result of each of the VCGs and the time of starting sequencing of the members of each of the VCGs being greater than or equal to a preset allowed time interval from sequencing to calling the sequencing result.

Specifically, the calling module, when the starting time of a multiframe head in a read direction is reached, reads a member sequencing result of a VCG corresponding to the multiframe, wherein an interval between the starting time of the multiframe head in the read direction and the end time of a sub-frame corresponding to the latest member of the VCG corresponding to the multiframe is equal to the allowed time interval from sequencing to calling the sequencing result.

A value of the allowed time interval from sequencing to calling the sequencing result is the larger one of the total time T1 required to sequence the members when the members of all the VCGs arrive simultaneously and the total time T2 required to sequence the members when the members of all the VCGs arrive separately.

The total time T1 required to sequence the members when the members of all the VCGs arrive simultaneously is a product of the time required to sequence members of a VCG and the number of supported VCGs.

The total time T2 required to sequence the members when the members of all the VCGs arrive separately is a time interval between the time at which a H4 or K4 byte in the last sub-frame in a multiframe of a channel corresponding to the latest member in a VCG and the time at which the next multiframe head of the channel arrives.

A process in which the device implements sequencing of members of multiple virtual concatenation groups will be described in a specific application scenario.

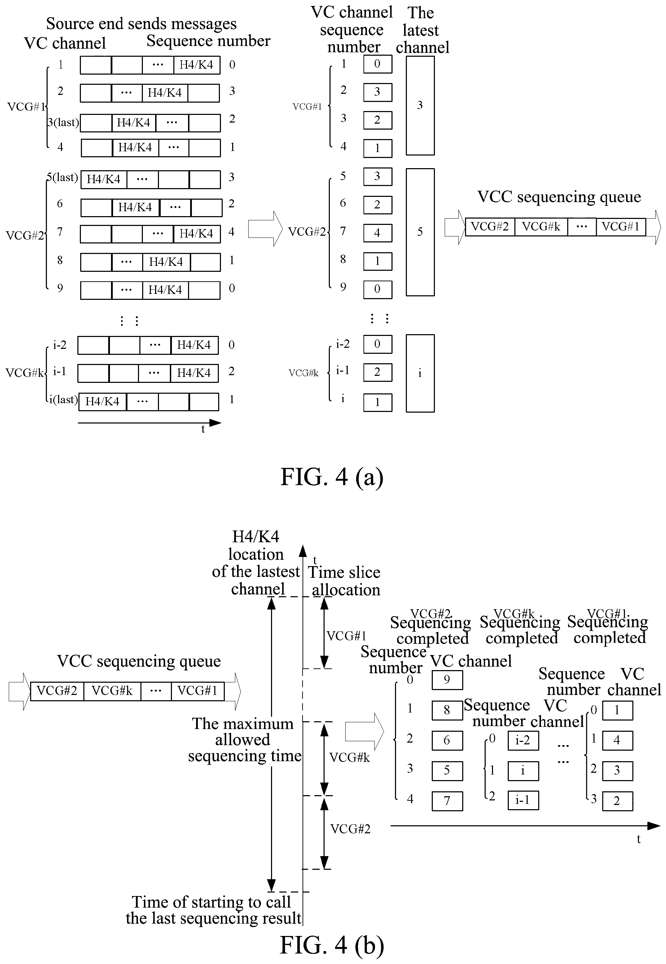

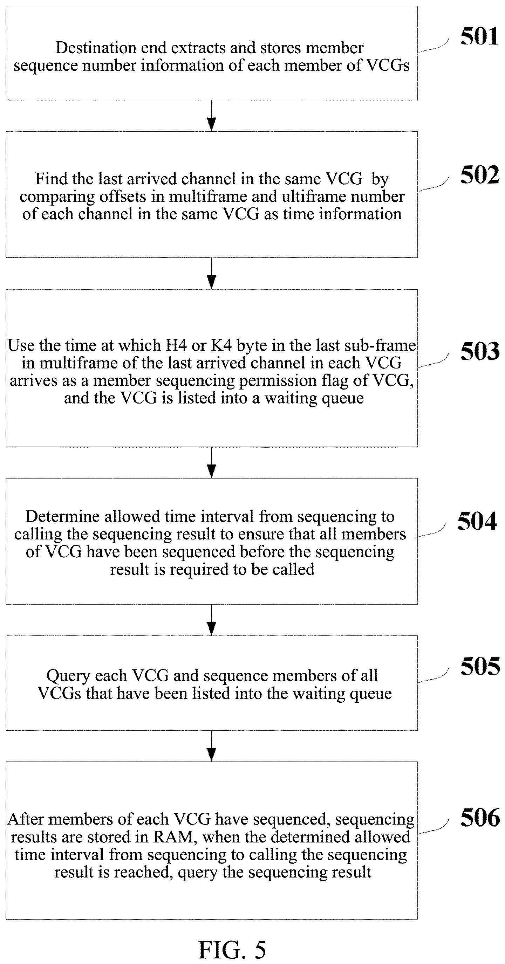

Taking k VCGs to be sequenced as example in this embodiment, the process of sequencing the members of the multiple VCGs is described. The k virtual concatenation groups to be sequenced are VCG1, VCG2, ......, VCGk, as shown in FIG. 4. At a source end, depending on configuration, a member in each virtual concatenation group has two attributes, one is VC (channel number), and the other is member serial number. For example, in FIG. 4, there are four members in VCG # 1, VC channel numbers corresponding to VCG #1 are 1, 2, 3 and 4 respectively, the member serial number corresponding to each VC channel is 0, 3, 2, 1 respectively; there are 5 members in VCG #2, VC channel number corresponding to VCG #2 are 5, 6, 7, 8, 9 respectively, and the member serial number corresponding to each VC channel is 3, 2, 4, 1, 0 respectively; ......; and there are three members in VCG #k, VC channel numbers corresponding to VCG #k are i-2, i-1, i respectively, the member sequence number corresponding to each VC channel is 0, 2, 1 respectively. The member serial number is virtual concatenation information sent by the source end, and high-order virtual concatenation is stored in a H4 byte, while low-order virtual concatenation is stored in a K4 byte. The process is shown in FIG. 5 and comprises the following steps.

In step 501, a destination end extracts and stores sequence number (SQ) information of each member of the VCGs.

In this step, a virtual concatenation recovery module at the destination end extracts information of the H4 or K4 byte in a multiframe of each channel to acquire a member serial number to which each VC channel belongs, and stores the information into a RAM for reading at the beginning of sequencing.

In this embodiment, the member serial numbers 0, 3, 2, 1 of the VC channels 1, 2, 3, 4 of VCG #1; the member serial numbers 3, 2, 4, 1, 0 of the VC channels 5, 6, 7, 8, 9 of VCG #2; ......; and the member serial numbers 0, 2, 1 of the VC channels i-2, i-1, i of VCG #k are extracted.

In step 502, the destination end finds the last arrived channel in the same VCG (a member corresponding to this channel is the latest member) by comparing offsets in the multiframe and the ultiframe number of each channel in the same VCG as time information.

The time at which all the members of each VCG arrive at the destination end is not exactly the same, and has some delay. Only when all H4 or K4 bytes of all channels of one VCG arrive, the member sequence number information of all the channels of the VCG can be extracted to sequence the members. Therefore, the present invention controls the starting time of the sequencing using information of the last arrived channel (that is, the latest member).

Specifically, the destination end might use multiframe information carried by each channel as large time information, and use a byte counter to record offset time information of each member in the multiframe to obtain the arrival time information of the member, and then compare all channels of the same VCG to acquire the last arrived VC channel, to which the member belongs is the latest member.

In this embodiment, through the comparison, it follows that, the last arrived VC channel of VCG #1 is 3; the last arrived VC channel of VCG #2 is 5; ......; and the last arrived VC channel of VCG #k is i, see FIG. 4 (a).

In step 503, the time at which the H4 or K4 byte in the last sub-frame in the multiframe of the last arrived channel in each VCG arrives (that is, the arrival time information of the latest member in each VCG) is used as a member sequencing permission flag of the VCG, and the VCG is listed into a waiting queue.

When the H4 or K4 byte in the sub-frame corresponding to the latest member of a certain VCG arrives, it is indicated that the end of the same multiframe of all the members of the VCG arrives, at this time, the members of the VCG can be sequenced. However, since a lot of members of multiple VCGs will be sequenced, the sequencing is not necessary performed immediately, at this time, the VCC can be listed into the sequencing waiting queue according to a queuing strategy (that is, queuing according to the order of the time of determining the member sequencing permission flag of each VCG), and then exit the queue after the sequencing is completed.

In this embodiment, the queuing order of the k VCGs is 1, ......, k, 2.

In step 504, an allowed time interval from sequencing to calling the sequencing result is determined to ensure that all members of the VCG have been sequenced before the sequencing result is required to be called. A value of the allowed time interval from sequencing to calling the sequencing result is the larger one of the total time T1 required to sequence the members when the members of all the VCGs arrive simultaneously and a time interval T2 between the H4 or K4 position in the last subframe in the multiframe of the last arrived channel in each VCG and the starting time of the next multiframe head. Therefore, when a time interval between the time of calling the sequencing result and the starting time of member sequencing is larger than or equal to the allowed time interval from sequencing to calling the sequencing result, it is ensured that the members of all VCGs have been sequenced before the sequencing result is called.

Specifically, the time Vi required to sequence members of a VCG is calculated, and is multiplied by the number of supported VCGs (k in this embodiment) to obtain a time interval Vi×k (that is, T1). A time interval between the time at which the H4 or K4 byte in the last sub-frame in the multiframe of the channel corresponding to the latest member in one VCG and the time at which the next multiframe head in the channel arrives is Ti (ie, T2). The larger one of the time interval Vi×k and the time interval Ti is used as the allowed time interval from sequencing to calling the sequencing result.

This is mainly because, when the allowed time interval from sequencing to calling the sequencing result is determined, it should be ensured that in the most compact case (that is, the end time of the multiframe of the last arrived channel of each of the VCGs is reached simultaneously or successively) the members have been sequenced before the sequencing result is required to be called. At this time, the allowed time interval from sequencing to calling the sequencing result is at least the total time T1 (that is, Vi×k) required to sequence the members of all the VCGs. Another boundary condition also should be taken into account, where at the time at which the H4 or K4 byte of the last sub-frame in the multiframe of the last arrived channel of a certain VCG arrives, there are no other VCGs waiting to be sequenced (that is, the sequencing of the members of the VCG can be started immediately). At this time, the allowed time interval form sequencing to calling the sequencing result is the time interval T2 (that is, Ti) between the time at which the H4 or K4 byte in the last sub-frame in the multiframe of the last arrived channel in the VCG and the time at which the next multiframe head of the earliest arrived channel in the VCG arrives. Therefore, in order to ensure that the members have been sequenced before the sequencing result is required to be called in all cases, Vi×k and Ti are required to be compared to choose the larger one as the allowed time interval from sequencing to calling the sequence result, and the sequencing result will be recalled when the allowed time interval is reached or exceeded. Ti is determined by the frame structure and is a fixed value, Vi is determined by the sequencing algorithm, and k is the number of the VCGs and is determined by the application environment.

In this step, the starting time of the multiframe head in a read direction might be adjusted to ensure implementation of the allowed time interval from sequencing tocalling the sequencing result, i.e., the starting time of the multiframe head in the read direction is adjusted such that the time interval between the adjusted starting time of the multiframe frame in the read direction and the time at which the H4 or K4 byte of the last sub-frame in the multiframe of the last arrived channel in the VCG equals to the allowed time interval form sequencing to calling the sequencing result.

In this embodiment, as shown in FIG. 4 (b), by controlling a time point at which the last sequencing result begins to be called, it is ensured that the time point at which the sequencing result is required to be called is not earlier than the time required to sequence the members of all the VCGs. For example, taking VCG #1 as reference, before the end of the multiframe of the last arrived channel of VCG #1 arrives, there are no other VCGs listed into the sequencing waiting queue; when or after the end of the multiframe arriving at the channel last of VCG #1 arrives, the other VCGs arrive simultaneously or successively; therefore, this is theoretically the most compact sequencing case where the sequence of the members of all supported VCGs can be ensured to be completed on time even if all the supported VCGs arrive simultaneously or successively by adjusting the starting time of the next multiframe of each VCG, i.e., the time at which the sequencing result is required to be called.

In step 505, each VCG is queried and members of the VCGs that have been listed into the waiting queue are sequenced.

In this step, only the members of the VCGs entering into the sequencing process are required to be sequenced. A sequencing circuit module sequences the members of the VCGs in the waiting queue according to the queuing queue in turn.

In this embodiment, as shown in FIG. 4 (b), according to the queue sequencing result in the step 503, the order of queuing of the k VCGs is 1, ......, k, 2, then the order of the VCGs to be sequenced in the step 505 is also 1, ......, k, 2. First, members of VCG #1 are sequenced, and the sequencing result is that five members with SQs being 0, 1, 2, 3, 4 correspond to channels 9, 8, 6, 5, 7 respectively; and so on, and then members of VCG#k are sequenced, and the sequencing result is that three members with SQs being 0, 1, 2 correspond to channels i-2, i, i-1; ......; and finally, members of VCG#2 are sequenced, and the sequencing result is that four members with SQs being 0, 1, 2, 3 correspond to channels 1, 4, 3, 2.

In step 506, after members of each VCG have sequenced, the sequencing results are stored in a RAM. When the determined allowed time interval from sequencing to calling the sequencing result is reached or exceeded, the sequencing result can be queried. A member order recovery module reads the corresponding VC channel according to the recovered sequence number of each VCG in turn, to complete the whole process of sequencing the members.

In this step, meeting the determined allowed time interval from sequencing to calling the sequencing result means that: when the starting time of the multiframe head is the read direction is reached, the sequencing result is read, wherein the time interval between the starting time of the multiframe head in the read direction and the time of the end of the multiframe of the last arrived channel of the VCG equals to the allowed time interval from sequencing to calling the sequencing result.

In the process described above, determining the allowed time interval from sequencing to calling the sequencing result in step 504 might be any operation prior to step 501 or 502, that is, the allowed time interval from sequencing to calling the sequencing result can also be pre-configured.

It can be seen from the embodiments described above, the technical scheme of the present invention can use a member sequencing circuit to achieve sequencing of members of multiple VCGs, therefore, compared to the prior art, the hardware logic resource consumption in the case of multiple VCGs is decreased greatly.

The invention is defined by the appended claims.

### Industrial Applicability

The present invention provides a method and device which can implement sequencing of members of multiple virtual concatenation groups (VCG) by determining a sequencing queue of all arrived members of the VCGs according to the order of arrival time of the latest member in each of the VCGs and sequencing members of each of the VCGs in the sequencing queue in turn. When the preset allowed time interval from sequencing to calling the sequencing result is reached, the member sequencing result of each VCG is called, thereby solving the problem of high hardware logic resource consumption in the case of multiple VCGs. The technical scheme of the present invention can use a member sequencing circuit to achieve sequencing of members of multiple VCGs, therefore, compared to the prior art, the hardware logic resource consumption in the case of multiple VCGs is decreased greatly.

## Claims

1. A method for sequencing members of multiple virtual concatenation groups, hereinafter referred as to VCG, comprising:
determining a sequencing queue of all arrived members of the VCGs according to the order of arrival time of the latest member in each of the VCGs, and sequencing members of each of the VCGs in the sequencing queue in turn; and
calling a member sequencing result of each of the VCGs when the time of calling a member sequencing result of each of the VCGs is reached, an interval between the time of calling the member sequencing result of each of the VCGs and the time of starting sequencing of the members of each of the VCGs being greater than or equal to a preset allowed time interval from sequencing to calling the sequencing result,
**characterised in that** in the step of calling a member sequencing result of each of the VCGs when the time of calling a member sequencing result of each of the VCGs is reached,
when the starting time of a multiframe head in a read direction is reached, a member sequencing result of a VCG corresponding to the multiframe is read, wherein an interval between the starting time of the multiframe head in the read direction and the end time of a sub-frame corresponding to the latest member of the VCG corresponding to the multiframe is equal to the allowed time interval from sequencing to calling the sequencing result.

2. The method according to claim 1, wherein
a value of the allowed time interval from sequencing to calling the sequencing result is the larger one of the total time T1 required to sequence the members when the members of all the VCGs arrive simultaneously and the total time T2 required to sequence the members when the members of all the VCGs arrive separately.

3. The method according to claim 2, wherein
the total time T1 required to sequence the members when the members of all the VCGs arrive simultaneously is a product of the time required to sequence members of a VCG and the number of supported VCGs.

4. The method according to claim 2, wherein
the total time T2 required to sequence the members when the members of all the VCGs arrive separately is a time interval between the time at which a H4 or K4 byte in the last sub-frame in a multiframe of a channel corresponding to the latest member in a VCG and the time at which the next multiframe head of the channel arrives.

5. The method according to claim 3 or 4, wherein
the arrival time of the latest member in the VCG is the arrival time of a H4 or K4 byte in the latest subframe obtained by comparing the arrival time of the H4 or K4 byte in the last sub-frame in a multiframe corresponding to each member of the VCG.

6. A device for sequencing members of multiple virtual concatenation groups, hereinafter referred as to VCG, comprising a queue sequencing module, a sequencing circuit module and a calling module, wherein
the queue sequencing module is configured to determine a sequencing queue of all arrived members of the VCGs according to the order of arrival time of the latest member in each of the VCGs;
the sequencing circuit module is configured to sequence members of each of the VCGs in the sequencing queue in turn; and
the calling module is configured to call a member sequencing result of each of the VCGs when the time of calling the member sequencing result of each of the VCGs is reached, an interval between the time of calling the member sequencing result of each of the VCGs and the time of starting sequencing of the members of each of the VCGs being greater than or equal to a preset allowed time interval from sequencing to calling the sequencing result,
**characterised in that** the calling module is configured to, when the starting time of a multiframe head in a read direction is reached, read a member sequencing result of a VCG corresponding to the multiframe, wherein an interval between the starting time of the multiframe head in the read direction and the end time of a sub-frame corresponding to the latest member of the VCG corresponding to the multiframe is equal to the allowed time interval from sequencing to calling the sequencing result.

7. The device according to claim 6, wherein
a value of the allowed time interval from sequencing to calling the sequencing result is the larger one of the total time T1 required to sequence the members when the members of all the VCGs arrive simultaneously and the total time T2 required to sequence the members when the members of all the VCGs arrive separately;
the total time T1 required to sequence the members when the members of all the VCGs arrive simultaneously is a product of the time required to sequence members of a VCG and the number of supported VCGs; and
the total time T2 required to sequence the members when the members of all the VCGs arrive separately is a time interval between the time at which a H4 or K4 byte in the last sub-frame in a multiframe of a channel corresponding to the latest member in a VCG and the time at which the next multiframe head of the channel arrives.

8. The device according to claim 7, wherein
the arrival time of the latest member in the VCG is the arrival time of a H4 or K4 byte in the latest subframe obtained by comparing the arrival time of the H4 or K4 byte in the last sub-frame in a multiframe corresponding to each member of the VCG.

## Patentansprüche

1. Ein Verfahren zum Sortieren von Elementen von mehreren Gruppen virtueller Verkettung, die nachstehend als VCGs bezeichnet werden, beinhaltend:
Bestimmen einer Sortierungswarteschlange aller angekommenen Elemente der VCGs gemäß der Reihenfolge der Ankunftszeit des neuesten Elements in jeder der VCGs und Sortieren von Elementen jeder der VCGs in der Sortierungswarteschlange nacheinander; und
Aufrufen eines Elementensortierungsergebnisses jeder der VCGs, wenn die Zeit des Aufrufens eines Elementensortierungsergebnisses jeder der VCGs erreicht ist, wobei ein Abstand zwischen der Zeit des Aufrufens des Elementensortierungsergebnisses jeder der VCGs und der Zeit des Anfangens des Sortierens der Elemente jeder der VCGs größer als oder gleich einem festgelegten zulässigen Zeitabstand vom Sortieren bis zum Aufrufen des Sortierungsergebnisses ist,
**dadurch gekennzeichnet, dass** in dem Schritt des Aufrufens eines Elementensortierungsergebnisses jeder der VCGs, wenn die Zeit des Aufrufens eines Elementensortierungsergebnisses jeder der VCGs erreicht ist,
wenn die Anfangszeit eines Mehrfachrahmenkopfs in einer Leserichtung erreicht wird, ein Elementensortierungsergebnis einer VCG, die dem Mehrfachrahmen entspricht, gelesen wird, wobei ein Abstand zwischen der Anfangszeit des Mehrfachrahmenkopfs in der Leserichtung und der Endzeit eines Unterrahmens, der dem neuesten Element der VCG entspricht, die dem Mehrfachrahmen entspricht, gleich dem zulässigen Zeitabstand vom Sortieren bis zum Aufrufen des Sortierungsergebnisses ist.

2. Verfahren gemäß Anspruch 1, wobei
ein Wert des zulässigen Zeitabstands vom Sortieren bis zum Aufrufen des Sortierungsergebnisses der größere von der Gesamtzeit T1, die zum Sortieren der Elemente erforderlich ist, wenn die Elemente aller VCGs gleichzeitig ankommen, und der Gesamtzeit T2, die zum Sortieren der Elemente erforderlich ist, wenn die Elemente aller VCGs getrennt ankommen, ist.

3. Verfahren gemäß Anspruch 2, wobei
die Gesamtzeit T1, die zum Sortieren der Elemente erforderlich ist, wenn die Elemente aller VCGs gleichzeitig ankommen, ein Produkt der Zeit, die zum Sortieren von Elementen einer VCG erforderlich ist, und der Zahl an unterstützten VCGs ist.

4. Verfahren gemäß Anspruch 2, wobei
die Gesamtzeit T2, die zum Sortieren der Elemente erforderlich ist, wenn die Elemente aller VCGs getrennt ankommen, ein Zeitabstand zwischen der Zeit, zu der ein H4- oder K4-Byte in dem letzten Unterrahmen in einem Mehrfachrahmen eines Kanals, der dem neuesten Element in einer VCG entspricht, ankommt, und der Zeit, zu der der nächste Mehrfachrahmenkopf des Kanals ankommt, ist.

5. Verfahren gemäß Anspruch 3 oder 4, wobei
die Ankunftszeit des neuesten Elements in der VCG die Ankunftszeit eines H4- oder K4-Bytes in dem neuesten Unterrahmen ist, die durch Vergleichen der Ankunftszeit des H4- oder K4-Bytes in dem letzten Unterrahmen in einem Mehrfachrahmen, der jedem Element der VCG entspricht, erhalten wird.

6. Eine Vorrichtung zum Sortieren von Elementen von mehreren Gruppen virtueller Verkettung, die nachstehend als VCGs bezeichnet werden, beinhaltend ein Warteschlangensortierungsmodul, ein Sortierungsschaltungsmodul und ein Aufrufmodul, wobei
das Warteschlangensortierungsmodul konfiguriert ist, um eine Sortierungswarteschlange aller angekommenen Elemente der VCGs gemäß der Reihenfolge der Ankunftszeit des neuesten Elements in jeder der VCGs zu bestimmen; das Sortierungsschaltungsmodul konfiguriert ist, um Elemente jeder der VCGs in der Sortierungswarteschlange nacheinander zu sortieren; und
das Aufrufmodul konfiguriert ist, um, wenn die Zeit des Aufrufens des Elementensortierungsergebnisses jeder der VCGs erreicht ist, ein Elementensortierungsergebnis jeder der VCGs aufzurufen, wobei ein Abstand zwischen der Zeit des Aufrufens des Elementensortierungsergebnisses jeder der VCGs und der Zeit des Anfangens des Sortierens der Elemente jeder der VCGs größer als oder gleich einem festgelegten zulässigen Zeitabstand vom Sortieren bis zum Aufrufen des Sortierungsergebnisses ist,
**dadurch gekennzeichnet, dass** das Aufrufmodul konfiguriert ist, um, wenn die Anfangszeit eines Mehrfachrahmenkopfs in einer Leserichtung erreicht wird, ein Elementensortierungsergebnis einer VCG, die dem Mehrfachrahmen entspricht, zu lesen, wobei ein Abstand zwischen der Anfangszeit des Mehrfachrahmenkopfs in der Leserichtung und der Endzeit eines Unterrahmens, der dem neuesten Element der VCG entspricht, die dem Mehrfachrahmen entspricht, gleich dem zulässigen Zeitabstand vom Sortieren bis zum Aufrufen des Sortierungsergebnisses ist.

7. Vorrichtung gemäß Anspruch 6, wobei
ein Wert des zulässigen Zeitabstands vom Sortieren bis zum Aufrufen des Sortierungsergebnisses der größere von der Gesamtzeit T1, die zum Sortieren der Elemente erforderlich ist, wenn die Elemente aller VCGs gleichzeitig ankommen, und der Gesamtzeit T2, die zum Sortieren der Elemente erforderlich ist, wenn die Elemente aller VCGs getrennt ankommen, ist;
die Gesamtzeit T1, die zum Sortieren der Elemente erforderlich ist, wenn die Elemente aller VCGs gleichzeitig ankommen, ein Produkt der Zeit, die zum Sortieren von Elementen einer VCG erforderlich ist, und der Zahl an unterstützten VCGs ist; und die Gesamtzeit T2, die zum Sortieren der Elemente erforderlich ist, wenn die Elemente aller VCGs getrennt ankommen, ein Zeitabstand zwischen der Zeit, zu der ein H4- oder K4-Byte in dem letzten Unterrahmen in einem Mehrfachrahmen eines Kanals, der dem neuesten Element in einer VCG entspricht, ankommt, und der Zeit, zu der der nächste Mehrfachrahmenkopf des Kanals ankommt, ist.

8. Vorrichtung gemäß Anspruch 7, wobei
die Ankunftszeit des neuesten Elements in der VCG die Ankunftszeit eines H4- oder K4-Bytes in dem neuesten Unterrahmen ist, die durch Vergleichen der Ankunftszeit des H4- oder K4-Bytes in dem letzten Unterrahmen in einem Mehrfachrahmen, der jedem Element der VCG entspricht, erhalten wird.

## Revendications

1. Une méthode de séquencement de membres de multiples groupes de concaténation virtuelle, appelés VCG dans ce qui suit, comprenant :
la détermination d'une file d'attente de séquencement de tous les membres arrivés des VCG selon l'ordre d'instant d'arrivée du membre le plus tardif dans chacun des VCG, et le séquencement de membres de chacun des VCG dans la file d'attente de séquencement tour à tour ; et
l'appel d'un résultat de séquencement de membres de chacun des VCG quand l'instant d'appel d'un résultat de séquencement de membres de chacun des VCG est atteint, un intervalle entre l'instant d'appel du résultat de séquencement de membres de chacun des VCG et l'instant de début de séquencement des membres de chacun des VCG étant supérieur ou égal à un intervalle de temps autorisé prédéfini du séquencement à l'appel du résultat de séquencement,
**caractérisée en ce qu'**à l'étape d'appel d'un résultat de séquencement de membres de chacun des VCG quand l'instant d'appel d'un résultat de séquencement de membres de chacun des VCG est atteint,
quand l'instant de début d'une tête de multitrame dans une direction de lecture est atteint, un résultat de séquencement de membres d'un VCG correspondant à la multitrame est lu, un intervalle entre l'instant de début de la tête de multitrame dans la direction de lecture et l'instant de fin d'une sous-trame correspondant au membre le plus tardif du VCG correspondant à la multitrame étant égal à l'intervalle de temps autorisé du séquencement à l'appel du résultat de séquencement.

2. La méthode selon la revendication 1, dans laquelle
une valeur de l'intervalle de temps autorisé du séquencement à l'appel du résultat de séquencement est le plus grand temps entre le temps total T1 requis pour séquencer les membres quand les membres de tous les VCG arrivent simultanément et le temps total T2 requis pour séquencer les membres quand les membres de tous les VCG arrivent séparément.

3. La méthode selon la revendication 2, dans laquelle
le temps total T1 requis pour séquencer les membres quand les membres de tous les VCG arrivent simultanément est un produit du temps requis pour séquencer des membres d'un VCG et du nombre de VCG pris en charge.

4. La méthode selon la revendication 2, dans laquelle
le temps total T2 requis pour séquencer les membres quand les membres de tous les VCG arrivent séparément est un intervalle de temps entre l'instant auquel un octet H4 ou K4 arrive dans la dernière sous-trame dans une multitrame d'un canal correspondant au membre le plus tardif dans un VCG et l'instant auquel la tête de multitrame suivante du canal arrive.

5. La méthode selon la revendication 3 ou 4, dans laquelle
l'instant d'arrivée du membre le plus tardif dans le VCG est l'instant d'arrivée d'un octet H4 ou K4 dans la sous-trame la plus tardive obtenu par comparaison de l'instant d'arrivée de l'octet H4 ou K4 dans la dernière sous-trame dans une multitrame correspondant à chaque membre du VCG.

6. Un dispositif de séquencement de membres de multiples groupes de concaténation virtuelle, appelés VCG dans ce qui suit,
comprenant un module de séquencement de file d'attente, un module de circuit de séquencement et un module d'appel, dans lequel
le module de séquencement de file d'attente est configuré pour déterminer une file d'attente de séquencement de tous les membres arrivés des VCG selon l'ordre d'instant d'arrivée du membre le plus tardif dans chacun des VCG ;
le module de circuit de séquencement est configuré pour séquencer des membres de chacun des VCG dans la file d'attente de séquencement tour à tour ; et
le module d'appel est configuré pour appeler un résultat de séquencement de membres de chacun des VCG quand l'instant d'appel du résultat de séquencement de membres de chacun des VCG est atteint, un intervalle entre l'instant d'appel du résultat de séquencement de membres de chacun des VCG et l'instant de début de séquencement des membres de chacun des VCG étant supérieur ou égal à un intervalle de temps autorisé prédéfini du séquencement à l'appel du résultat de séquencement, **caractérisé en ce que** le module d'appel est configuré pour, quand l'instant de début d'une tête de multitrame dans une direction de lecture est atteint, lire un résultat de séquencement de membres d'un VCG correspondant à la multitrame, un intervalle entre l'instant de début de la tête de multitrame dans la direction de lecture et l'instant de fin d'une sous-trame correspondant au membre le plus tardif du VCG correspondant à la multitrame étant égal à l'intervalle de temps autorisé du séquencement à l'appel du résultat de séquencement.

7. Le dispositif selon la revendication 6, dans lequel
une valeur de l'intervalle de temps autorisé du séquencement à l'appel du résultat de séquencement est le plus grand temps entre le temps total T1 requis pour séquencer les membres quand les membres de tous les VCG arrivent simultanément et le temps total T2 requis pour séquencer les membres quand les membres de tous les VCG arrivent séparément ;
le temps total T1 requis pour séquencer les membres quand les membres de tous les VCG arrivent simultanément est un produit du temps requis pour séquencer des membres d'un VCG et du nombre de VCG pris en charge ; et
le temps total T2 requis pour séquencer les membres quand les membres de tous les VCG arrivent séparément est un intervalle de temps entre l'instant auquel un octet H4 ou K4 arrive dans la dernière sous-trame dans une multitrame d'un canal correspondant au membre le plus tardif dans un VCG et l'instant auquel la tête de multitrame suivante du canal arrive.

8. Le dispositif selon la revendication 7, dans lequel
l'instant d'arrivée du membre le plus tardif dans le VCG est l'instant d'arrivée d'un octet H4 ou K4 dans la sous-trame la plus tardive obtenu par comparaison de l'instant d'arrivée de l'octet H4 ou K4 dans la dernière sous-trame dans une multitrame correspondant à chaque membre du VCG.
